Europäisches Patentamt

(19) European Patent Office

Office européen des brevets

(11) Numéro de publication: **0 023 163**
**B1**

(12) **FASCICULE DE BREVET EUROPEEN**

(45) Date de publication du fascicule du brevet:
**18.04.84**

(51) Int. Cl.³: **G 01 N 27/90**

(21) Numéro de dépôt: **80400941.3**

(22) Date de dépôt: **24.06.80**

(54) **Sonde souple destinée au contrôle non destructif de tubes de grande longueur.**

(30) Priorité: **24.07.79 FR 7919080**

(43) Date de publication de la demande:
**28.01.81 Bulletin 81/4**

(45) Mention de la délivrance du brevet:
**18.04.84 Bulletin 84/16**

(84) Etats contractants désignés:
**BE DE GB IT**

(56) Documents cités:
**EP - A - 0 008 710**
**EP - A - 0 009 575**
**FR - A - 2 320 542**
**FR - A - 2 406 198**

(73) Titulaire: **HOTCHKISS-BRANDT SOGEME H.B.S.,**
**186, rue du Faubourg Saint-Honoré, F-75008 Paris (FR)**

(72) Inventeur: **Amedro, Albert, "THOMSON-CSF"**
**SCPI 173, bld Haussmann, F-75360 Paris Cedex 08 (FR)**
Inventeur: **Audenard, Bernard, "THOMSON-CSF"**
**SCPI 173, bld Haussmann, F-75360 Paris Cedex 08 (FR)**
Inventeur: **De Mol, René, "THOMSON-CSF"**
**SCPI 173, bld Haussmann, F-75360 Paris Cedex 08 (FR)**

(74) Mandataire: **Barbin le Bourhis, Joel et al,**
**THOMSON-CSF SCPI 173, boulevard Haussmann,**
**F-75379 Paris Cedex 08 (FR)**

Sonde souple destinée au contrôle non destructif de tubes de grande longueur

L'invention concerne une sonde souple destinée au contrôle non destructif de tubes de grande longueur. Elle concerne plus particulièrement une telle sonde assurant ce contrôle par la méthode dite des courants de Foucault à une ou plusieurs fréquences.

Une sonde de ce type est un moyen permettant l'introduction d'un capteur ou tête de mesure à l'intérieur du tube à contrôler et la transmission du signal fourni par ce capteur, significatif de l'absence ou de la présence de défaut. Ce capteur est placé à la partie avant de la sonde qui doit pouvoir progresser à l'intérieur du tube sur toute sa longueur et ceci quelle que soit sa géométrie, notamment sa longueur ou sa courbure.

Une première demande européenne interférente EP 0009575 (états contractants désignés CH, FR, GB, NL, SE) décrit une sonde destinée à l'examen de tubes échangeurs thermiques, cette sonde est poussée à l'intérieur de ces tubes par un tuyau flexible pousseur comportant deux parties de flexibilité différentes.

Une seconde demande européenne interférente EP 0008710 (états contractants désignés CH, FR, GB, NL, SE) décrit une sonde à courants de Foucault pour l'examen de tubes. Cette sonde comporte notamment une enveloppe flexible dans une direction radiale d'un diamètre supérieur à celui du capteur.

Le brevet français 2 320 542 décrit un dispositif de contrôle à courant de Foucault dont la sonde comprend successivement d'avant en arrière selon son sens de translation normale: une pièce de guidage antérieure, une pièce porte-bobinage et une pièce de guidage postérieure reliées entre elles par un moyen élastique tendant à placer ces trois pièces en ligne droite.

Les sondes actuelles connues doivent, lorsque la longueur de tube dépasse une certaine dimension être injectées au moyen d'air comprimé. Il s'agit là d'une technique difficile à mettre en œuvre, surtout lorsque les tubes sont courbés, et qui doit même être proscrite pour certaines applications dans lesquelles la présence d'air comprimé constitue un risque de pollution à éviter impérativement.

La présente invention a pour objet de pallier ces inconvénients, et concerne une sonde souple équipée à son extrémité avant d'un capteur chargé de détecter par la technique des courants de Foucault toute anomalie dans la structure des tubes. Elle concerne plus particulièrement une sonde souple destinée au contrôle non destructif de tubes de grande longueur, caractérisée en ce qu'elle comprend un corps reliant une tête de mesure à une prise de branchement électrique; ce corps comporte une première gaine extérieure formé d'un ressort en spirale à spires jointives de section circulaire présentant à la fois un faible allongement à la traction et un faible taux de déformation à la compression, première gaine qui coopère avec une seconde gaine intérieure réalisé en une matière plastique à faible coefficient d'allongement en traction, de telle sorte que durant l'introduction de la sonde dans le tube à contrôler, le ressort présente une faible déformation, tandis que lors de l'extraction de la sonde hors du tube, après l'opération de contrôle, la gaine intérieure en matière plastique s'oppose à tout risque d'allongement excessif.

L'invention sera mieux comprise à l'aide des explications qui vont suivre et des figures jointes parmi lesquelles:

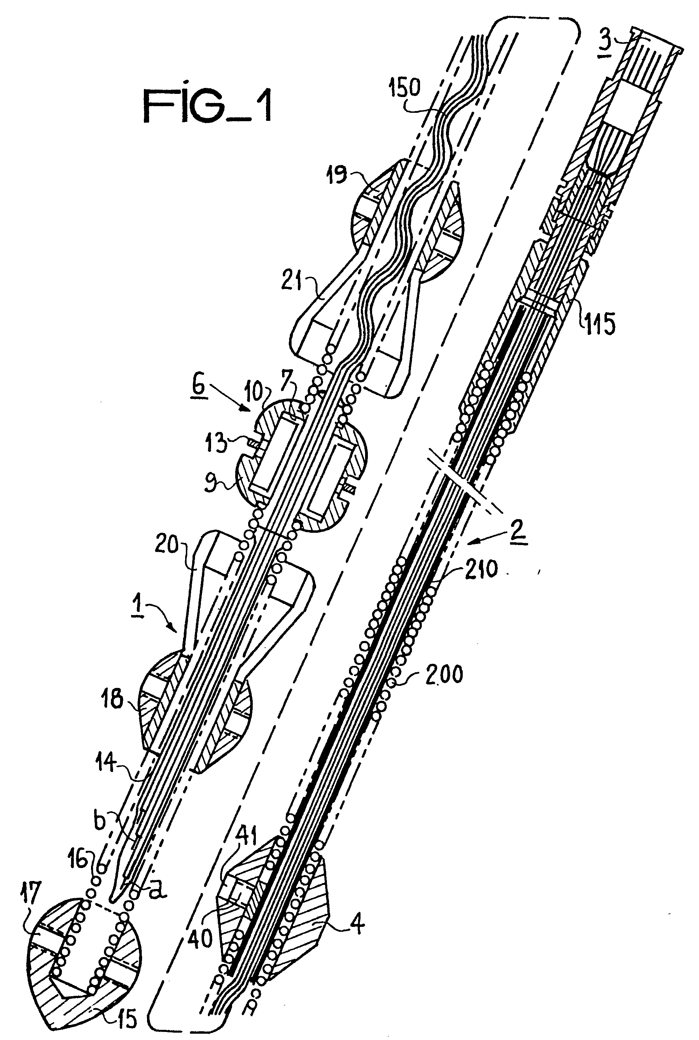

les figures 1 à 3 illustrent schématiquement deux exemples de réalisation d'une sonde souple conforme à l'invention.

Pour plus de clarté, les mêmes éléments portent les mêmes références dans toutes les figures.

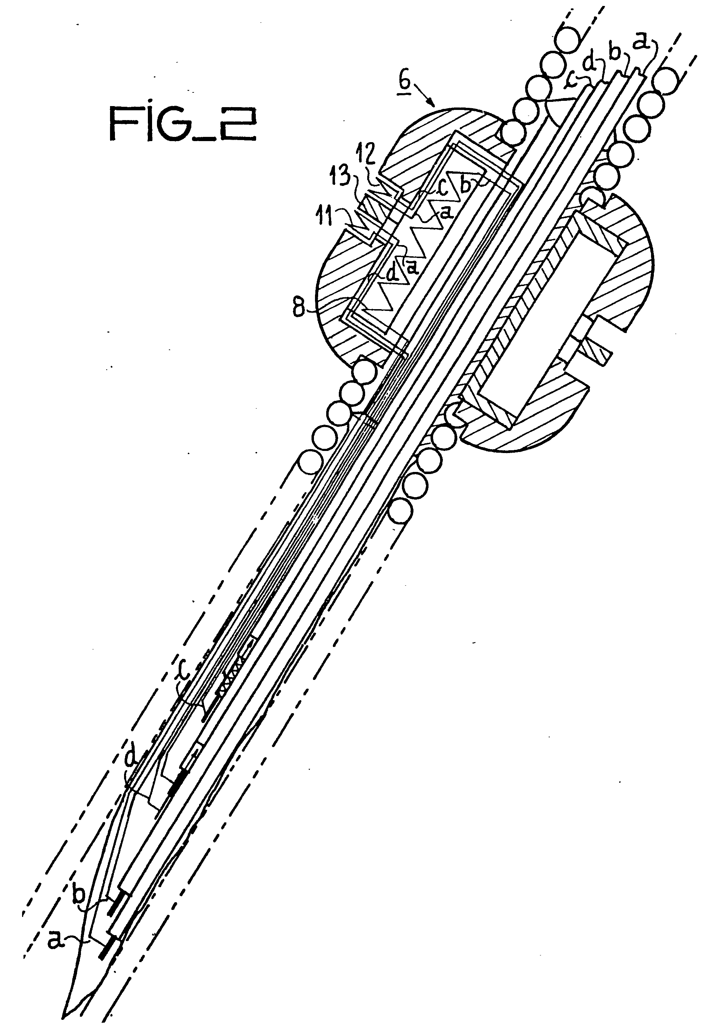

Comme le montrent les figures 1 et 2 (la figure 2 représentant un détail agrandi de la figure 1), une sonde conforme à 'invention comporte essentiellement trois parties; la tête de mesure proprement dite 1, le corps 2 de la sonde et la prise de branchement 3. Ces parties sont reliées entre elles par des premier et second éléments de liaison 4 et 115.

La tête de mesure dont certaines éléments sont plus visible sur la figure 2 comprend un capteur 6 de type classique comportant les éléments actifs de cette tête. Elle comprend notamment un axe 7 par exemple en acier inoxydable sur lequel est disposé le bobinage de saturation 8 et deux demi-coquilles 9 et 10 dans lesquelles sont inserrés les bobinages extérieurs 11 et 12 séparés l'un de l'autre par une bague de séparation 13. Ces bobinages sont reliés aux câbles d'alimentation a, b, c, et d, par des liaisons réalisées en escalier à la pàrtie avant de la sonde, ce qui confère à ces liaisons des qualités de facilité de mise en œuvre et de fiabilité. Toutes ces liaisons et ces câbles sont enrobés dans une matière isolante et souple telle qu'un élastomère de silicone 14. A l'extrême pointe de la sonde, on dispose une ogive de guidage 15 serrée sur la gaine 16 de protection de la tête de mesure qui est un ressort à spires rondes jointives lui donnant une certaine souplesse. Cette ogive 15 est rendue solidaire de la gaine 16 au moyen, par exemple, d'au moins une vis introduite dans le filetage 17. Pour mieux guider et centrer cette tête de mesure deux ogives de centrages 18 et 19 solidaires chacune d'une «tulipe» 20 et 21 à «pétales» en matière souple sont prévues de part et d'autre du capteur 6. Une zone de raccordement souple 150 est prévue entre la tête de mesure 1 et le corps 2 proprement dit. Cette zone 150 est rendue solidaire du corps 2 au moyen d'un premier élément de liaison 4.

Conformément à l'invention la caractéristique essentielle du corps 2 est de présenter à la fois un faible allongement à la traction c'est-à-dire à l'effort qu'il subit durant l'extraction de la sonde hors du tube lorsque l'opération de contrôle est terminée et également un faible taux de déformation à la compression c'est-à-dire à l'effort qu'il risque de subir durant la phase d'introduction de la sonde dans le tube. Cet effort est d'autant plus grand que les dimensions des tubes sont faibles en diamètre et importantes en longueur ou que ces tubes présentent des profils à faible rayon de courbure.

Dans une première variante de réalisation schématisée sur les figures 1 et 2, ce corps 2 est constitué d'une gaine comprenant la combinaison d'une première gaine extérieure constituée par un ressort 200 à spires jointives de section circulaire et d'une seconde gaine intérieure 210 réalisée en matière plastique présentant un coefficient faible d'allongement en traction. Dans ces conditions durant toute la phase d'introduction de la sonde à l'intérieur du tube à contrôler, la gaine extérieure résistant à la compression empêche toute déformation excessive. De même, durant la phase d'extraction de la sonde hors du tube, la gaine en matière plastique s'oppose à l'allongement de l'ensemble évitant ainsi tout risque de détérioration de la sonde. Une telle combinaison permet d'éviter l'utilisation d'air comprimé, même pour l'inspection de tubes verticaux, car la gaine assure une rigidité suffisante pour que la progression de la sonde soit obtenue avec un entraîneur mécanique de type connu. Le corps 2 (du côté avant) est relié à la zone de raccordement 150 elle-même solidaire du capteur 6, au moyen d'un premier élément de liaison 4 qui se présente sous la forme d'un manchon muni d'un taraudage 40, destiné à recevoir une vis, le tout étant bouché à l'araldite 41. Il s'agit là d'un exemple de réalisation de cet élément de liaison nullement limitatif. Du côté arrière, il est relié à la prise de branchement électrique 3 au moyen d'un second élément de liaison 115 se présentant sous la forme d'un manchon soudé à l'araldite aux deux pièces à relier.

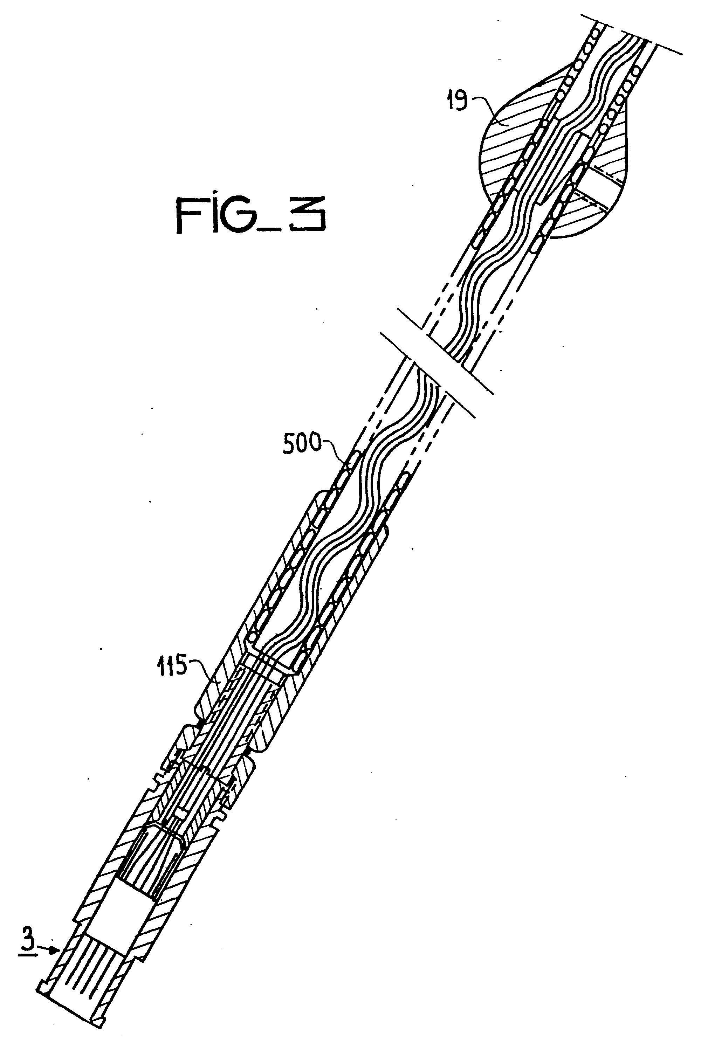

Dans une seconde variante, le corps 2 de la sonde schématisé sur la figure 3, est réalisé au moyen d'une gaine constitué uniquement par un ressort à spires planes jointives 500. Une telle configuration confère à ce corps la caractéristique déjà définie précédemment: il présente à la fois un faible allongement à la traction et un faible taux de déformation à la compression. Les autres éléments de la sonde déjà décrits au moyen des figures précédentes coopèrent avec ce corps pour permettre l'accès sur toute la longueur du tube à contrôler de la tête de mesure qui lui est solidaire. Le corps 2 est relié à la partie avant de la sonde par un premier élément de liaison qui, dans cette variante, est constitué par l'ogive de centrage 19 et à la prise de branchement 3 par un second élément de liaison 115.

Les applications d'une sonde conforme à l'invention, sont nombreuses. Elles sont notamment bien adaptées au contrôle non destructif de tubes de faible diamètre et de très grande longueur, présentant par endroit des rayons de courbures très faibles. C'est le cas par exemple des tubes en U à jambes très longues.

**Revendications**

1. Sonde souple destinée au contrôle non destructif de tubes de grande longueur, caractérisée en ce qu'elle comprend un corps (2) reliant une tête de mesure (1) à une prise de branchement électrique (3), ce corps (2) comportant une première gaine (200) extérieure, formée d'un ressort en spirale à spires jointives de section circulaire présentant à la fois un faible allongement à la traction et un faible taux de déformation à la compression, première gaine (200) qui coopère avec une seconde gaine (210) intérieure, réalisée en une matière plastique à faible coefficient d'allongement en traction, de telle sorte que durant l'introduction de la sonde dans le tube à contrôler, le ressort (200) présente une faible déformation, tandis que lors de l'extraction de la sonde hors du tube, après l'opération de contrôle, la gaine intérieure (210) en matière plastique s'oppose à tout risque d'allongement excessif.

2. Sonde selon la revendication 1, modifiée en ce que le ressort en spiral à spires jointives de section circulaire est remplacé par un ressort (500) à spires de section plane.

3. Sonde selon l'une des revendications précédentes, caractérisée en ce que ce corps (2) est rendu solidaire dans sa partie avant de la tête de mesure (1) au moyen d'un premier élément de liaison (4) et dans sa partie arrière à la prise de branchement électrique (3) au moyen d'un second élément de liaison (115).

4. Sonde selon la revendication 4, caractérisée en ce qu'elle comprend en outre, au moins une ogive de centrage (18) 19) coopérant avec une tulipe à pétales en matière plastique souple.

**Claims**

1. A flexible probe for the nondestructive testing of long tubes, characterized in that it comprises a body (2) which connects a measuring head (17 to an electrical branching unit (3) this body (2) comprising a first outer cover (200) constituted by a helical spring with contiguous windings and with a circular cross section, presenting a low elongation coefficient at traction efforts as well as a low deformation degree at compression efforts, this first cover (200) cooperating with a second inner cover (210) which is made of plastics material having a low elongation coefficient at traction efforts, in such a way that the spring (200) presents during the introduction of the probe into the tube under test a low degree of deformation whereas the inner cover (210) which is of plastics material is opposed to any excessive elongation during the extraction of the probe from the tube.

2. A probe according to claim 1, modified in such a way that the helical spring with contiguous windings and circular cross-section is replaced by a spring (500) having contiguous windings and a plane cross-section.

3. A probe according to any of the preceding claims, characterized in that this body (2) is rendered integral by its front part with the measuring head (1) by means of a first connecting element (4) and by its rear part with the electrical branching unit (3) by means of a second connecting element (115).

4. A probe according to claim 4, characterized in that it further comprises at least one ribbed vault (18, 19) which cooperates with a tulip having petals made of a flexible plastics material.

**Patentansprüche**

1. Biegsame Sonde zur zerstörungsfreien Prüfung langer Rohre, dadurch gekennzeichnet, dass sie einen Korpus (2) enthält, der einen Messkopf (1) mit einem elektrischen Anschlussstecker (3) verbindet und der eine erste, äussere Hülle (200) aufweist, die aus einer Spiralfeder mit aneinanderliegenden Windungen und mit kreisförmigem Querschnitt besteht und sowohl eine geringe Zugdehnung als auch eine geringe Kompressionsverformung besitzt, wobei die erste Hülle (200) mit einer zweiten, inneren Hülle (210) zusammenwirkt, die aus einem Kunststoffmaterial mit einem niedrigen Zugdehnungsbeiwert besteht, derart, dass die Feder (200) bei der Einführung der Sonde in das zu prüfende Rohr nur wenig verformt wird, während beim Herausziehen der Sonde aus dem Rohr, d.h. nach dem Prüfvorgang, die innere Hülle (210) aus Kunststoff sich jeder übermässigen Längung widersetzt.

2. Sonde nach Anspruch 1, geändert derart, dass die Spiralfeder mit aneinanderliegenden Windungen und kreisförmigem Querschnitt durch eine Feder (500) mit aneinanderliegenden Windungen und ebenem Querschnitt ersetzt ist.

3. Sonde nach einem der vorhergehenden Ansprüche, dadurch gekennzeichnet, dass der Korpus (2) in seinem vorderen Bereich mit dem Messkopf (1) über ein erstes Verbindungselement (4) und in seinem hinteren Bereich mit dem elektrischen Anschlussstecker (3) über ein zweites Verbindungselement (115) fest verbunden ist.

4. Sonde nach Anspruch 4, dadurch gekennzeichnet, dass sie ausserdem mindestens einen Zentrierbogen (18, 19) aufweist, der mit einer «Tulpenblüte» aus biegsamem Kunststoffmaterial zusammenwirkt.

# FIG_1

FIG_2

FIG_3